# EUROPEAN PATENT SPECIFICATION

(11) **EP 2 854 431 B1**
(45) Date of publication and mention of the grant of the patent: **19.09.2018**
(21) Application number: 12877227.4
(22) Date of filing: 23.07.2012
(51) Int. Cl.: H04W 8/18, H04W 4/21, H04L 29/08, G06Q 50/00

(54) **DEVICE, METHOD AND MOBILE TERMINAL FOR UPDATING MOBILE SOCIAL NETWORK USER STATE**
VORRICHTUNG, VERFAHREN UND MOBILES ENDGERÄT ZUR AKTUALISIERUNG DES STATUS EINES MOBILEN BENUTZERS VON SOZIALEN NETZWERKEN
DISPOSITIF, PROCÉDÉ ET TERMINAL MOBILE POUR MISE À JOUR DE L'ÉTAT D'UTILISATEURS MOBILES DE RÉSEAUX SOCIAUX

(30) Priority: 21.05.2012 CN 201210159885
(43) Date of publication of application: 01.04.2015
(73) Proprietor: ZTE Corporation, Shenzhen City, Guangdong Province 518057 (CN)
(72) Inventor: GOU, Dingyong, Shenzhen City Guangdong Province 518057 (CN)
(74) Representative: Murgitroyd & Company
(86) International application number: PCT/CN2012/079029
(87) International publication number: WO 2013/174072

(56) References cited:
- CN-A- 1 604 665
- CN-A- 101 404 823
- CN-A- 102 307 242
- US-A1- 2009 190 738
- US-A1- 2009 300 525
- US-A1- 2010 299 615
- US-A1- 2012 046 029

## Description

### Technical Field

The present invention relates to the field of mobile communication, and more particularly, to a device, a method and a mobile terminal for updating mobile social network user presence status.

### Background of the Invention

Social Network Services (SNS) is also known as social networking service. In the narrow sense, the social network refers to a network service such as Facebook, Google+, LinkedIn, Renren, or Pengyou from Tencent inc, which tends to build a strong social relationship with true identity. In the field of Internet, the interpersonal social relationship service is in fact far more than the abovementioned narrow sense social network and can further comprise other forms such as Microblog, Instant Message, and BBS community forum. In fact, these services are penetrated and integrated with each other to push the interpersonal communication channels evolving forward.

Internet-based social communication is currently a very popular business demand, and with the popularity of intelligent terminals such as smart phones and panel computers, more and more attention is paid to the mobile social communication. Users can keep a network connection through a variety of intelligent terminals and even non-intelligent terminals, so as to communicate and share with friends anytime and anywhere. The instant message has states such as "online", "busy", "away", "offline", and so on, and in communities such as social networks, forums, and microblogs, the networks in some communities now can display the state "online" and "offline" of a friend, and even can chat directly on a web page, but on the whole, the integration of these communication means is still very superficial.

On the other hand, the users at work or in life require mobile terminal devices such as mobile phones do not sound in some cases (for example, in a meeting, in a place such as library), while expect the sound and vibration turned on simultaneously in some other places (when shopping for example), and such settings are called "profiles" on mobile terminals such as mobile phones. The settings of the profiles are related to the state which the user is currently in, such as online, busy, and so on. In fact, the profiles can also be extended as other textual representations, such as personalized signature in the instant message.

The existing SNS is originally developed for desktop computers (including laptops), and lacks or has not enough capability for perceiving the switch of the usage scenario of the users. When the SNS promotes to mobile terminals such as smart phones and forms into the driving force of mobile Internet, there is still a lot of room for improving the user experience of the SNS mobile communication. For example, there is no good solution on the deep integration of the phone's own profiles and the state of the user in the SNS.

Further relevant technologies are also known from US 2009/300525 A1 (JOLLIFF MARIA ELENA ROMERA [US] ET AL) 3 December 2009 which relates to a method and system for automatically updating an avatar to indicate a mobile device user's status, and US 2010/399615 A1 (MILUZZO EMILIANO [US] ET AL) 25 November 2010 which relates to a method for injecting sensed presence into social networking applications.

US2009190738 A1 (GUEDALIA ISAAC DAVID [IL] ET AL) 30 July 2009 which relates to a method of propagating information across a network, also discloses background information that are useful to understand the context of the invention, as defined in the appended claims.

### Summary of the Invention

The invention is defined by the appended set of claims. The embodiments and/or examples of the following description which are not covered by the appended set of claims are considered as not being part of the present invention.

The embodiment of the present invention provides a device and method for updating SNS mobile user presence status, to make the mobile terminal profile update associated with state update of the mobile network community, so as to enhance the user experience.

The above problem is solved by a device for updating a user presence status on social network services (SNS) in a mobile terminal according to claim 1, a mobile terminal according to claim 4 and a method for updating a user presence status on social network services (SNS) in a mobile terminal according to claim 6.

Also provided is a device for updating the mobile SNS user presence status in accordance with an embodiment of the present invention comprises:
a profile interface module, which is configured to: switch profiles of a mobile terminal;
a background module, which is configured to: detect changes of the profile interface module, and when the profile changes, obtain a latest profile setting through a notification from the profile interface module, and notify to a subscription publishing module;
the subscription publishing module, which is configured to: receive requests from SNS client modules for subscribing "profile change notification", record identifications of the SNS client modules which subscribe the profile change notification, and notify the SNS client modules which subscribe the profile change notification one by one when the profile changes; and
a SNS client module, which is configured to: receive a user presence status update notification published by the subscription publishing module, and publish updated state content in a SNS system.

Alternatively, the subscription publishing module is configured to:
record the identifications of the SNS client modules which subscribe the profile change notification into a notification list for registration, and query the notification list and notify a new profile to respective SNS clients in the notification list one by one when the profile changes.

Alternatively, the SNS comprises: social networks, instant messages, instant messaging communities, microblogs, or forums.

Also provided is a mobile terminal, which comprises the abovementioned device for updating the mobile SNS user presence status.

Alternatively, the mobile terminal is a mobile phone or a panel computer.

Also provided is a method for updating mobile SNS user presence status, characterized in that, the method is used in a mobile terminal comprising a profile interface module, a background module, a subscription publishing module and a SNS client module, and the method comprises:
the SNS client module sending a registration request to the subscription publishing module to apply for subscribing a profile state change notification;
the subscription publishing module recording an identification of the SNS client module which have subscribed;
when switching the profiles, the background module sending a notification of a profile state change event to the subscription publishing module, and the notification carrying content of a new profile entry;
after receiving the notification of the event, the subscription publishing module notifying the SNS client modules which have subscribed one by one of the content of the new profile entry;
the SNS client modules publishing the content of the new profile entry in a corresponding SNS system.

Alternatively, the subscription publishing module records identifications of the SNS client modules which subscribe the profile change notification into a notification list for registration, and queries the notification list and notifies the new profile to respective the SNS client modules in the notification list one by one when the profile changes.

Alternatively, the SNS comprises: social network, instant message, microblog, or forum.

Alternatively, the mobile terminal is a mobile phone or a panel computer.

With the abovementioned method and device, the user of the mobile terminal does not have to manually update the latest state to each SNS system one by one, but trigger an automatic update via the mobile phone profile, so as to deeply integrate the mobile terminals with the social network services such as, microblogs, instant messages, and so on, thus the user can obtain a better using experience.

### Brief Description of the Drawings

The accompanying drawings are used to provide a further understanding of the embodiments of the present invention, and constitute a part of the specification but not a limitation of the present invention. In the accompanying drawings:
FIG. 1 is a block diagram of a device in accordance with an embodiment of the present invention;
FIG. 2 is a flow chart of a method in accordance with an embodiment of the present invention.

### Preferred Embodiments of the Invention

Hereinafter, in conjunction with the accompanying drawings, the preferred embodiments of the present invention will be described. It should be understand that, the preferred embodiments described herein are only used to illustrate and explain but not limit the present invention.

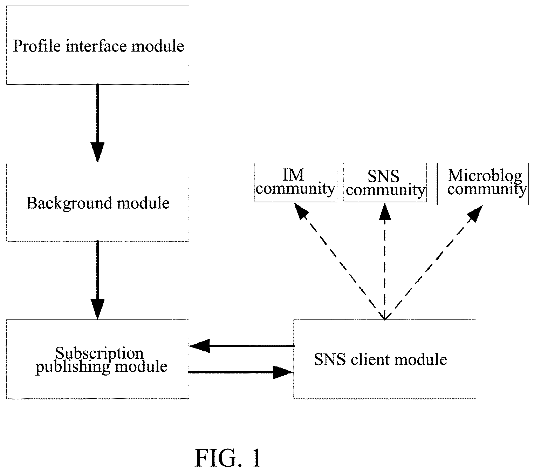

As shown in FIG. 1, the device for updating the mobile SNS user presence status in accordance with the embodiment of the present invention comprises a profile interface module, a background module, a subscription publishing module and SNS client modules. The profile interface module is used to switch the profiles of the mobile terminal, The user can also define the user's own settings including personalized signature besides of the profiles preset in the terminal. The background module is used to detect the changes of the profile interface module, and when the user switches the profiles, the latest profile settings are obtained through the notification of the profile interface module. The subscription publishing module is responsible for receiving the requests of other SNS clients for subscribing the "profile change notification" and recording the identifications of the SNS client modules which subscribe the profile state change notification, and when the profile changes, notifying the respective subscribers one by one according to the registration list. The SNS client modules are used for receiving the user presence status update notification published by the subscriptions publishing module, and publishing the updated state content in the SNS systems.

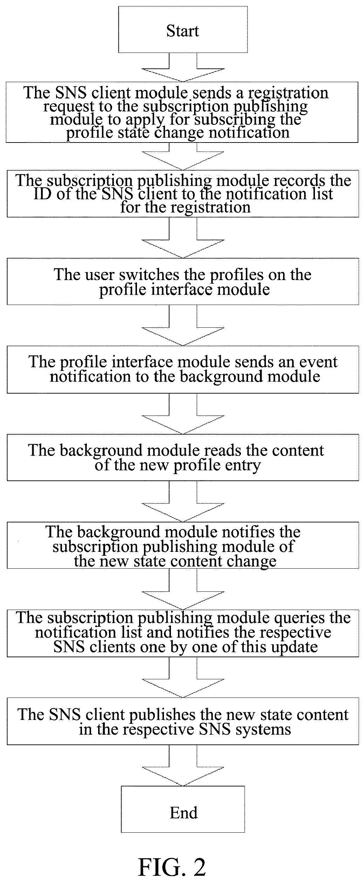

The embodiment of the present invention further relates to a method for updating the SNS mobile user presence status, and refer to FIG. 2, the SNS client module in the mobile user terminal sends a registration request to the subscription publishing module to apply for subscribing the profile state change notification, the subscription publishing module records the ID of the SNS client module into the notification list for registration, the user switches the profiles on the profile interface module, the profile interface module sends an event notification to the background module, the background module reads the content of the new profile entry and notifies the new state content change to the subscription publishing module, the subscription publishing module queries the notification list and notifies this update to the respective SNS clients one by one, and the SNS clients publish the new state content in the respective SNS systems.

The embodiments of the present invention further relates to a mobile terminal, which can be a smart phone or a panel computer, including the device for updating the SNS mobile user presence status. The SNS can be instant messages, instant messaging communities, social networks, SNS communities, microblogs, forums, and so on.

A phone is preset with a normal SNS client module as a SNS client application preloaded in the mobile phone when out of the factory. When the profiles switch, this module is responsible for updating the latest user presence status to each SNS. Since the subscription publishing module provides a public API, the phone does not need to preload the SNS client module. The function of automatically publishing the user presence status update can also be achieved by the user installing the client himself and using a public API.

The embodiment of the present invention can extend the profiles of the mobile terminal, and allow the user to add the user's own customized profile entries, and also support editing the preset common profile entries, including but not limited to, playing sound, phone vibrating, lights flashing, interface icons, customized state text, and other content, the user can add and set different profile entries as needed. For example, the normal mode in the profile may correspond to the user online state in the SNS being the state of "online" or "available", the user's friends know they can interact with the user in this state, including instant messaging chat, viewing the microblog, commenting on the pictures shared by friends on the SNS. The user can set playing sound when new messages arrive in this state to prompt, and the vibrating alert can also be added for sure; the conference mode may correspond to the user presence status in the SNS being "meeting" or "busy", and the friends try not to disturb when seeing this state; the phone does not sound when receiving a new message, but a vibrating alert can be sent; the user presence status can be set as "driving on highway" or "invisible" in the SNS for the driving mode, to inform the friends not to disturb right now, the friends can still send a message, but the user's mobile phone does not prompt by sound or vibration when receiving the message, while only displays a prompt of new message on the interface.

Those ordinarily skilled in the art can understand that all or some of steps of the abovementioned method may be completed by the programs instructing the relevant hardware, and the programs may be stored in a computer-readable storage medium, such as read only memory, magnetic or optical disk. Alternatively, all or some of the steps of the abovementioned embodiments may also be implemented by using one or more integrated circuits. Accordingly, each module/unit in the abovementioned embodiments may be realized in a form of hardware, or in a form of software function modules. The present invention is not limited to any specific form of hardware and software combinations.

It should be noted that the present invention may have a variety of other embodiments, and without departing from the scope of the present invention, one skilled in the art may make various appropriate changes and modifications in accordance with the embodiments of the present invention, and these appropriate changes and modifications should belong to the protection scope of the appended claims of the present invention.

### Industrial Applicability

With the method and device in the present invention, the user of the mobile terminal does not have to manually update the latest state to each SNS system one by one, but trigger an automatic update via the mobile phone profiles, so as to deeply integrate the mobile terminals with social networks services such as microblogs, instant messages, and so on, thus the user can obtain a better using experience.

## Claims

1. A device for updating a user presence status on social network services, SNS, in a mobile terminal, comprising:
a profile interface module, on which profiles of the mobile terminal are switched by a user;
a background module, which is configured to: detect changes of the profiles on the profile interface module, and when the profiles change, obtain content of a new profile entry through a notification of a profile state change event from the profile interface module, and send the content of the new profile entry to a subscription publishing module;
the subscription publishing module, which is configured to: receive registration requests from SNS client modules for subscribing to profile state change notifications, record identifications of the SNS client modules which subscribe to the profile state change notification into a notification list for registration, then query the notification list and notify the content of the new profile entry to the respective SNS client module in the notification list one by one when the profiles change; and
each of the SNS client modules, which is configured to: receive the content of the new profile entry from the subscription publishing module, and publish the content of the new profile entry to a corresponding SNS system, so as to change the user presence status of the corresponding SNS system according to the content of the new profile entry.

2. The device of claim 1, wherein, the SNS comprises: social networks, instant messages, microblogs, or forums.

3. A mobile terminal, comprising the device for updating a user presence status on social network services, SNS, of any one of claims 1 to 2.

4. The mobile terminal of claim 3, wherein, the mobile terminal is a mobile phone or a panel computer.

5. A method for updating a user presence status on social network services, SNS, in a mobile terminal, **characterized in that**, the method is used in the mobile terminal comprising a profile interface module, a background module, a subscription publishing module and one or more SNS client modules, and the method comprises:
each SNS client module sending a registration request to the subscription publishing module to apply for subscribing to a profile state change notification;
the subscription publishing module recording an identification of the SNS client module which has subscribed to the profile state change notification into a notification list for registration;
when a user switches the profiles on the profile interface module, the background module obtaining content of a new profile entry through a notification of a profile state change event from the profile interface module, and sending the content of the new profile entry to the subscription publishing module;
after receiving the content of the new profile entry, the subscription publishing module querying the notification list and notifying the content of the new profile entry to the respective SNS client module in the notification list one by one when the profiles change;
the SNS client modules which receive the content of the new profile entry publishing the content of the new profile entry to corresponding SNS systems, so as to change the user presence status of each SNS system according to the content of the new profile entry.

6. The method of claim 5, wherein,
the SNS comprises: social networks, instant messages, microblogs, or forums.

7. The method of claim 6, wherein,
the mobile terminal is a mobile phone or a panel computer.

## Patentansprüche

1. Eine Vorrichtung zum Aktualisieren eines Benutzerpräsenzstatus in sozialen Netzwerkdiensten, SNS (Social Network Services), in einem mobilen Endgerät, die Folgendes beinhaltet:
ein Profilschnittstellenmodul, an dem Profile des mobilen Endgeräts von einem Benutzer umgeschaltet werden;
ein Hintergrundmodul, das für Folgendes konfiguriert ist: Detektieren von Änderungen der Profile am Profilschnittstellenmodul und, wenn sich die Profile ändern, Erlangen von Inhalt einer neuen Profileingabe durch eine Benachrichtigung über ein Profilstatusänderungsereignis von dem Profilschnittstellenmodul und Senden des Inhalts der neuen Profileingabe an ein Abonnementveröffentlichungsmodul;
das Abonnementveröffentlichungsmodul, das für Folgendes konfiguriert ist: Empfangen von Registrierungsanforderungen von SNS-Client-Modulen zum Abonnieren von Profilstatusänderungsbenachrichtigungen, Aufzeichnen von Kennungen der SNS-Client-Module, die die Profilstatusänderungsbenachrichtigung abonnieren, in einer Benachrichtigungsliste zur Registrierung, dann Abfragen der Benachrichtigungsliste und Benachrichtigen des jeweiligen SNS-Client-Moduls in der Benachrichtigungsliste über den Inhalt der neuen Profileingabe nacheinander, wenn sich die Profile ändern; und
jedes der SNS-Client-Module, das für Folgendes konfiguriert ist: Empfangen des Inhalts der neuen Profileingabe vom Abonnementveröffentlichungsmodul und Veröffentlichen des Inhalts der neuen Profileingabe in einem entsprechenden SNS-System, um den Benutzerpräsenzstatus des entsprechenden SNS-Systems gemäß dem Inhalt der neuen Profileingabe zu ändern.

2. Vorrichtung gemäß Anspruch 1, wobei der SNS Folgendes beinhaltet: soziale Netzwerke, Sofortnachrichten, Mikroblogs oder Foren.

3. Ein mobiles Endgerät, das die Vorrichtung zum Aktualisieren des Benutzerpräsenzstatus in sozialen Netzwerkdiensten, SNS, gemäß einem der Ansprüche 1 bis 2 beinhaltet.

4. Mobiles Endgerät gemäß Anspruch 3, wobei das mobile Endgerät ein Mobiltelefon oder ein Panelcomputer ist.

5. Ein Verfahren zum Aktualisieren des Benutzerpräsenzstatus in sozialen Netzwerkdiensten, SNS, in einem mobilen Endgerät, **dadurch gekennzeichnet, dass** das Verfahren im mobilen Endgerät, das ein Profilschnittstellenmodul, ein Hintergrundmodul, ein Abonnementveröffentlichungsmodul und ein oder mehrere SNS-Client-Module beinhaltet, verwendet wird und das Verfahren Folgendes beinhaltet:
Senden, durch jedes SNS-Client-Modul, einer Registrierungsanforderung an das Abonnementveröffentlichungsmodul, um das Abonnieren einer Profilstatusänderungsbenachrichtigung zu beantragen;
Aufzeichnen, durch das Abonnementveröffentlichungsmodul, einer Kennung des SNS-Client-Moduls, das die Profilstatusänderungsbenachrichtigung abonniert hat, in einer Benachrichtigungsliste zur Registrierung;
wenn ein Benutzer die Profile am Profilschnittstellenmodul umschaltet, Erlangen, durch das Hintergrundmodul, von Inhalt einer neuen Profileingabe durch eine Benachrichtigung über ein Profilstatusänderungsereignis und Senden des Inhalts der neuen Profileingabe an das Abonnementveröffentlichungsmodul;
nach dem Empfangen des Inhalts der neuen Profileingabe Abfragen, durch das Abonnementveröffentlichungsmodul, der Benachrichtigungsliste und Benachrichtigen des jeweiligen SNS-Client-Moduls in der Benachrichtigungsliste über den Inhalt der neuen Profileingabe nacheinander, wenn sich die Profile ändern;
Veröffentlichen, durch die SNS-Client-Module, die den Inhalt der neuen Profileingabe empfangen, des Inhalts der neuen Profileingabe in entsprechenden SNS-Systemen, um den Benutzerpräsenzstatus jedes SNS-Systems gemäß dem Inhalt der neuen Profileingabe zu ändern.

6. Verfahren gemäß Anspruch 5, wobei
der SNS Folgendes beinhaltet: soziale Netzwerke, Sofortnachrichten, Mikroblogs oder Foren.

7. Verfahren gemäß Anspruch 6, wobei
das mobile Endgerät ein Mobiltelefon oder ein Panelcomputer ist.

## Revendications

1. Un dispositif pour mettre à jour un état de présence d'utilisateur sur des services de réseaux sociaux, SNS, dans un terminal mobile, comprenant :
un module d'interface de profils, sur lequel des profils du terminal mobile sont commutés par un utilisateur ;
un module d'arrière-plan, qui est configuré pour : détecter des changements des profils sur le module d'interface de profils, et lorsque les profils changent, obtenir un contenu d'une nouvelle entrée de profil par le biais d'une notification d'un événement de changement d'état de profil provenant du module d'interface de profils, et envoyer le contenu de la nouvelle entrée de profil à un module de publication d'abonnement ;
le module de publication d'abonnement, qui est configuré pour : recevoir des requêtes d'inscription provenant de modules de clients SNS pour s'abonner à des notifications de changement d'état de profil, enregistrer des identifications des modules de clients SNS qui s'abonnent à la notification de changement d'état de profil dans une liste de notifications pour une inscription, ensuite interroger la liste de notifications et notifier le contenu de la nouvelle entrée de profil au module de client SNS respectif dans la liste de notifications un par un lorsque les profils changent ; et
chacun des modules de clients SNS, qui est configuré pour : recevoir le contenu de la nouvelle entrée de profil provenant du module de publication d'abonnement, et publier le contenu de la nouvelle entrée de profil dans un système SNS correspondant, de façon à changer l'état de présence d'utilisateur du système SNS correspondant en fonction du contenu de la nouvelle entrée de profil.

2. Le dispositif de la revendication 1, où les SNS comprennent : des réseaux sociaux, des messages instantanés, des microblogs, ou des forums.

3. Un terminal mobile, comprenant le dispositif pour mettre à jour un état de présence d'utilisateur sur des services de réseaux sociaux, SNS, de l'une quelconque des revendications 1 à 2.

4. Le terminal mobile de la revendication 3, où le terminal mobile est un téléphone mobile ou un ordinateur à moniteur.

5. Un procédé pour mettre à jour un état de présence d'utilisateur sur des services de réseaux sociaux, SNS, dans un terminal mobile, **caractérisé en ce que** le procédé est utilisé dans le terminal mobile comprenant un module d'interface de profils, un module d'arrière-plan, un module de publication d'abonnement et un ou plusieurs modules de clients SNS, et le procédé comprend :
le fait que chaque module de client SNS envoie une requête d'inscription au module de publication d'abonnement pour demander de s'abonner à une notification de changement d'état de profil ;
le fait que le module de publication d'abonnement enregistre une identification du module de client SNS qui s'est abonné à la notification de changement d'état de profil dans une liste de notifications pour une inscription ;
lorsqu'un utilisateur commute les profils sur le module d'interface de profils, le fait que le module d'arrière-plan obtient un contenu d'une nouvelle entrée de profil par le biais d'une notification d'un événement de changement d'état de profil provenant du module d'interface de profils, et envoie le contenu de la nouvelle entrée de profil au module de publication d'abonnement ;
après réception du contenu de la nouvelle entrée de profil, le fait que le module de publication d'abonnement interroge la liste de notifications et notifie le contenu de la nouvelle entrée de profil au module de client SNS respectif dans la liste de notifications un par un lorsque les profils changent ;
le fait que les modules de clients SNS qui reçoivent le contenu de la nouvelle entrée de profil publient le contenu de la nouvelle entrée de profil dans des systèmes SNS correspondants, de façon à changer l'état de présence d'utilisateur de chaque système SNS en fonction du contenu de la nouvelle entrée de profil.

6. Le procédé de la revendication 5, où
les SNS comprennent : des réseaux sociaux, des messages instantanés, des microblogs, ou des forums.

7. Le procédé de la revendication 6, où
le terminal mobile est un téléphone mobile ou un ordinateur à moniteur.
